# EUROPEAN PATENT APPLICATION

(11) **EP 1 495 690 A1**
(43) Date of publication of application: **12.01.2005**
(21) Application number: 04007376.9
(22) Date of filing: 26.03.2004
(51) Int. Cl.: A43B 23/07, A43B 23/02, A43B 5/02, D04B 21/16, B32B 5/12

(54) **Shoe with padded upper**

(30) Priority: 10.07.2003 IT TO20030111 U
(71) Applicant: DIADORA-INVICTA SPA, 31031 Caerano di San Marco (Treviso) (IT)
(72) Inventor: Piras, Andrea, 20089 Basiglio (Milano) (IT)
(74) Representative: Gallarotti, Franco

(57) **Abstract**

A shoe has a sole (2) and an upper (3) comprising a padding. The padding is made with a three-dimensional fabric (5), the latter constituting also an inner lining for the shoe (1).

## Description

The present invention relates to a shoe comprising a sole and a padded upper.

Some types of shoes, such as for instance sports shoes, are equipped with a padded upper, so as to meet the necessary requirements of foot holding and retaining as well as softness.

At the current state of the art, such uppers are generally made by assembling together three different components or materials, and in particular an outer portion, made of natural or synthetic leather, an inner lining, typically made of nylon fabric, and a padding placed between the outer portion and the lining, made of a soft light material, for instance moltopren (foam plastic). The three aforesaid components are kept assembled together by means of quilting seams, which have a further foot retaining function.

Beyond being expensive, said technique causes problems of low water-tightness, since water tends to penetrate into the shoe through the holes of the aforesaid seams, thus reducing foot comfort, increasing shoe weight and drying time.

In order to obviate the problem of water penetration, shoes equipped with uppers made with one material only, i.e. without seams, were suggested in the past; said shoes are however not much comfortable and protective, since they have no padding and inner lining.

Starting from the aforesaid remarks, an aim of the present invention is to make a shoe equipped with a padded upper that can be made easily and with low costs.

Another aim of the present invention is to make a shoe that is highly water-tight and at the same time comfortable.

These and further aims, which shall be more evident in the following, are achieved according to the present invention by a shoe having a sole and an upper provided with a padding, where said padding is made at least partly with a three-dimensional fabric, which allows to make the upper easily and with low costs.

In the preferred embodiment of the invention, the three-dimensional fabric constitutes also at least a part of an inner lining of the shoe, with further advantages from the point of view of an easy and cheap manufacturing.

Advantageously, the three-dimensional fabric is associated with a first material, which constitutes the outer portion of the upper, practically in a seamless way. Shoe water-tightness is thus increased.

Preferably, the three-dimensional fabric is pressed locally onto the first material and comprises a first layer and a second layer being superimposed, spaced one from the other and connected to one another by means of a plurality of filaments; one of the aforesaid layers constitutes the inner lining of the shoe.

The preferred characteristics of the invention are listed in the appended claims, which are an integral and substantial part of the present invention.

Further aims, characteristics and advantages of the present invention shall become evident from the following description and from the accompanying drawings, provided as a mere explicative non-limiting example, in which:
- Figure 1 is a schematic perspective view of a shoe according to the invention, in particular a football shoe;
- Figure 2 is a schematic section along line II-II of Figure 1;
- Figure 3 is a schematic perspective view of a portion of an element constituting the upper of the shoe in Figure 1.

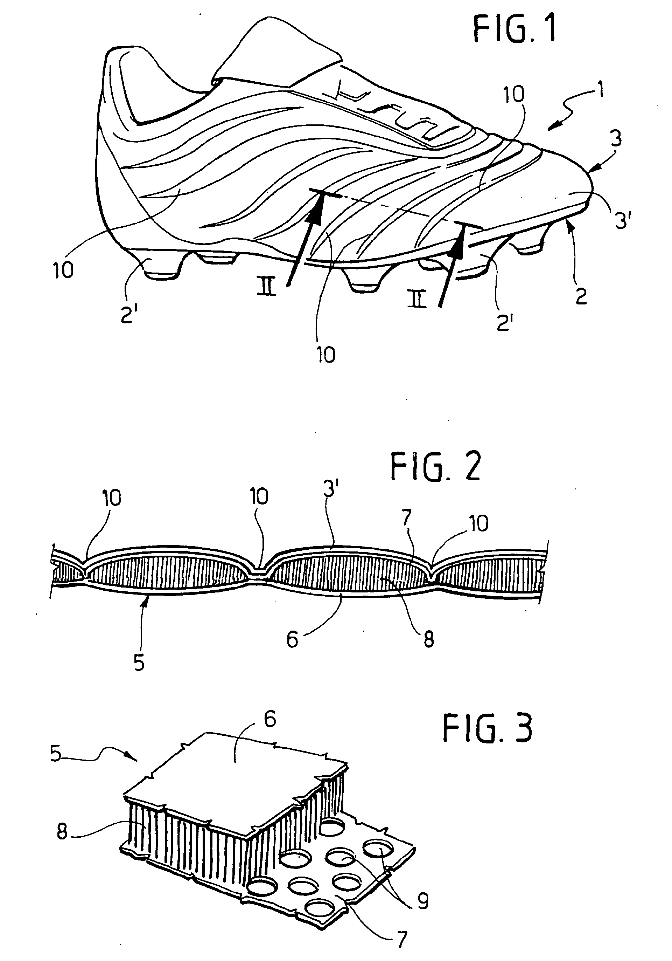

In Figure 1 number 1 globally refers to a shoe made according to the invention, which in the case shown by way of example is a football shoe.

The shoe 1 comprises a sole 2 and an upper 3, joined one to the other in a known way, for instance by gluing. The embodiment of the sole 2 falls outside the aims of the present invention and therefore it shall not be described and shown in detail; as a mere indication, the sole 2 can be made of synthetic material, for instance polyurethane or rubber, and have a plurality of studs 2' or a respective tread.

The upper 3 comprises an outer portion, made of leather or synthetic material, referred to with number 3'; the material of the outer portion 3' can be surface-treated, if necessary, according to known techniques, for instance it can be waterproofed or dyed.

According to an important feature of the invention, the surface of the portion 3' pointing inside the shoe 1 is associated with a three-dimensional fabric, which can act both as padding and as inner lining.

Three-dimensional fabrics are known per se (see for instance document US-A-2003/003383) and shall not be described here in further detail. Let us just point out that the typical structure of a three-dimensional fabric comprises two opposite layers or faces, separated by a space of some millimeters; said two outer faces are connected one to the other by means of at least a joining thread, arranged so as to form a plurality of filaments, which, as thin columns, space the aforesaid layers one from the other.

The filaments created by the joining thread act by spacing the two outer faces of the three-dimensional fabric one from the other, avoiding their direct overlapping with a "spring-like effect"; the aforesaid structure can be made of synthetic material and, if necessary, be woven simultaneously by means of a suitable loom.

The three-dimensional fabric envisaged according to the invention is globally referred to with number 5 in Figures 2 and 3.

The fabric 5 consists of a first layer of fabric 6 and of a second layer of fabric 7, connected one to the other through at least a thread arranged so as to form a plurality of filaments 8; said filaments 8 keep the layers 6, 7 spaced of a few millimeters one from the other, thus obtaining an elastic effect.

In the case shown by way of example, through openings 9 are made in the second layer 7; said openings 9 are made on purpose in the layer 7, i.e. they are not mere spaces resulting from meshes of said layer and have a section size or diameter of a few millimeters.

A three-dimensional fabric that can be suitable for use according to the present invention, having a structure resembling the one shown schematically in Figure 3, is for instance a fabric available on the market known as "Air Mesh".

To coupling purposes, the surface of the portion 3' designed to point inside the shoe 1 is previously covered with adhesive, for instance by applying a layer of so-called hot melt glue, and the fabric 5 is applied thereon. The coupling between the fabric 5 and the portion 3' can then be obtained by welding, for instance by thermal welding or high-frequency welding.

In localized areas of the upper 3, referred to with number 10, the components 3' and 5 are further pressed one onto the other; the upper 3 thus takes on between two areas 10 the structure of a padded mat, however without the need for any seam.

In the pressed areas 10, whose width can vary, the fabric 5 is pressed onto the material of the portion 3', the two components 5 and 3' building practically one body having a retaining and supporting function. Preferably, the surface of the material 3' on which the glue is applied is coupled with the layer 7 of three-dimensional fabric 5, as shown by way of example in Figure 2, parts of said surface being thus likely to get in contact also with the layer 6 through the holes 9.

The pressed or "crushed" areas 10, which are obtained through suitable molds used during the reciprocal coupling of the materials 3' and 5, further enable to create on the outer side of the upper 3 aesthetical-decorative designs or profiles, as it happens in the case of seams according to the prior art.

In the shoe according to the invention, the layer 6 of the fabric 5 can advantageously act as inner lining for the upper 3, whereas thanks to the presence of micro-filaments 8 in non-pressed areas, the fabric 5 acts like a padding for the upper 3; the upper 3 can thus be obtained by coupling only two different components or materials one with the other. The thickness of the three-dimensional fabric 5 can vary as a function of padding requirements and of the type of materials used for the outer portion 3'. The fact that the three-dimensional fabric 5 is fastened to the material of the outer portion 3' of the upper practically without seams, then allows to increase the degree of water-tightness of the shoe 1.

Obviously, construction details and embodiments can widely vary with respect to what has been described and shown, however without leaving the framework of the present invention as defined in the appended claims.

The invention has been described referring in particular to a football shoe, but it can obviously apply also to other types of shoes, not necessarily sports shoes.

The three-dimensional fabric 5 can be fastened to the natural or synthetic leather 3' of the upper 3 using any convenient known technique.

Obviously, the upper 3 can however be provided with some seams, for instance for fastening to the material 3' components of the shoe 1 (such as its closing system, tongue, covering edges, etcetera). As was explained, however, the invention enables to reduce the global number of seams in the shoe, with obvious advantages concerning its water-tightness degree.

## Claims

1. A shoe having a sole (2) and an upper (3) provided with a padding, **characterized in that** at least a part of said padding is made with a three-dimensional fabric (5).

2. The shoe according to claim 1, **characterized in that** the three-dimensional fabric (5) forms for at least a part of the inner lining (6) of the upper (3).

3. The shoe according to claim 1 or 2, **characterized in that** the upper (3) comprises a first material (3') with which the three-dimensional fabric (5) is associated basically without seams.

4. The shoe according to claim 3, **characterized in that** the first material (3') has a first and a second surface opposed to one another and pointing outside and inside the shoe (1), respectively, on the second surface a glue being present and onto said surface the three-dimensional fabric (5) being applied at least partially.

5. The shoe according to claim 3, **characterized in that** the three-dimensional fabric (4) and the first material (3') are pressed or crushed one onto the other in localized areas (10) of the upper (3), the latter thus taking on at least partly a structure basically resembling a padded mat.

6. The shoe according to claim 1, **characterized in that** the three-dimensional fabric (5) comprises a first layer (6) and a second layer (7) being superimposed, connected one to the other and spaced one from the other by means of a plurality of filaments (9).

7. The shoe according to claim 6, **characterized in that** a plurality of said filaments (9) is obtained by means of a same joining thread connecting the two layers (6, 7) of the three-dimensional fabric (5).

8. The shoe according to claims 2 and 6, **characterized in that** one of said layers (6, 7) builds at least a part of the inner lining (6).

9. The shoe according to claim 6, **characterized in that** through openings (9) are made in at least one of said layers (6, 7).

10. The shoe according to claims 5 and 9, **characterized in that**, at least in the localized areas (10), the second surface of the first material (3') is in contact with one (6) of said layers (6, 7) by means of the through openings (9) made in the other one (7) of said layers (6, 7).

11. The shoe according to claim 5, **characterized in that** the localized areas (10) define on the outside of the upper (3) aesthetical-decorative designs or profiles.
